# EUROPÄISCHE PATENTSCHRIFT

(11) **EP 0 442 093 B1**
(45) Veröffentlichungstag und Bekanntmachung des Hinweises auf die Patenterteilung: **15.09.1993**
(21) Anmeldenummer: 90124370.9
(22) Anmeldetag: 17.12.1990
(51) Int. Cl.: F16F 9/04, F16J 3/06

(54) **Befestigung eines Schlauchkörpers aus elastomerem Werkstoff an einer Armatur**
Fixing of an elastomeric hose to a fitting
Fixation d'une manche en élastomère à une armature

(30) Priorität: 14.02.1990 DE 4004451
(43) Veröffentlichungstag der Anmeldung: 21.08.1991
(73) Patentinhaber: Continental Aktiengesellschaft, 30165 Hannover (DE)
(72) Erfinder: Thurow, Gerhard, W-3008 Garbsen 1 (DE); Ney, Manfred, W-3016 Seelze 2 (DE)

(56) Entgegenhaltungen:
- EP-A- 0 274 615
- DE-A- 2 905 791
- DE-C- 282 869
- US-A- 3 788 628

## Beschreibung

Die Erfindung betrifft eine Befestigung eines wulstlosen Endabschnittes eines auf Zug belastbaren Schlauchkörpers aus elastomerem Werkstoff mit mindestens einer eingebetteten Festigkeitsträgerlage aus Cordfäden an einer Armatur aus Metall oder Kunststoff durch Einspannen der Wand des Endabschnittes zwischen der Armatur und einem separaten konzentrischen Spannstück.

Einfach-zylindrische Rollbälge werden für Luftfederungen für Straßenfahrzeuge verwendet. Sie sind in Form eines aus elastomeren Werkstoffen mit Verstärkungseinlagen bestehenden, hohlzylindrischen Schlauchkörpers hergestellt. Die Endabschnitte des Schlauchkörpers müssen an mit den gegeneinander abgefederten Fahrzeugteilen zusammenhängenden Stützelementen befestigt werden.

Für die Befestigung der Endabschnitte der Schlauchkörper an Stützelementen oder anderen Armaturen werden metallische Spannringe verwendet, die sich im allgemeinen bewährt haben.

Aus der EP 0 151 696 A ist es bekannt, den Endabschnitt einer schlauchförmigen Luftfeder an einem axialen Ansatz einer Armatur mit einem Spannring zu befestigen. Dabei ist weiter bekannt, daß der Ansatz der Armatur mit Umfangsrippen versehen ist, um im Einbauzustand des Rollbalges eine Erhöhung der Reibung zwischen der Schlauchwand und der Armatur zu erzielen.

Die Befestigung des Schlauchendabschnittes mit einem Spannring auf einem Befestigungsansatz mit Umfangsrippen beruht darauf, daß die Zugkräfte aus der Schlauchwand durch Reibung zwischen dem elastomeren Werkstoff und den umgebenden Armaturteilen übertragen werden. Um eine sichere Einspannung bei hohen Zugkräften zu erreichen, wird der Spannring fest aufgebracht. Ein zu starkes Pressen durch den Spannring auf den Endabschnitt kann aber nachteilig sein, da es zu einem Fließen des elastomeren Werkstoffes kommen kann, das der Gefahr des Ausreißens der Fäden der Festigkeitsträgerlage Vorschub leistet. Die über den Spannring ausübbare Preßkraft auf die Balgwand wird zudem durch die bevorzugt leichte Bauweise der Armatur begrenzt.

Der Erfindung liegt die Aufgabe zugrunde, eine Befestigung der eingangs beschriebenen Art derart auszugestalten, daß höhere Zugkräfte ohne die Gefahr des Herausziehens der Balgwand aus der Einspannung zwischen der Armatur und dem Spannstück übertragen werden können.

Die Aufgabe wird erfindungsgemäß durch die im Kennzeichen des Patentanspruchs 1 genannten Merkmale gelöst.

Die starke Einschnürung der Schlauchwand in der ersten Einspannzone stellt einen Formschluß dar und verhindert ein Durchrutschen der Schlauchwand bei einer Zugkraftbelastung. Die dahinterliegende zweite Einspannzone, die zum freien Ende des schlauchförmigen Endabschnittes reicht, steht unter einer geringeren Vorspannung durch die Spannteile, die eine räumliche Begrenzung der eingespannten Schlauchwand bilden. Die nur geringe Vorspannung vermeidet ein nachteiliges Fließen des elastomeren Materials und dadurch verursachtes Lösen von der Festigkeitsträgerlage im Einspannungsbereich. über die gesamte Länge der zweiten Einspannzone wird bei Zugbelastung eine Schubkraft zwischen dem elastomeren Werkstoff und der eingebetteten Festigkeitsträgerlage auftreten. Es wird dadurch verhindert, daß bei Beanspruchung des Schlauchkörpers durch eine Zugkraft eine schädliche örtliche Spannungsspitze hinter der ersten Einspannzone entsteht. Die Zugkraft wird durch die gesamte Festigkeitsträgerlage des eingespannten Endabschnittes als Schubspannung im elastomeren Werkstoff übertragen. Diese Schubspannung führt zu einer Druckerhöhung in der zweiten Einspannzone.

Eine Reibung zwischen den Spannteilen und dem elastomeren Schlauchkörper ist nicht erforderlich. Die sich an die erste Einspannzone, in der der Werkstoff sehr stark komprimiert wird, anschließende zweite Einspannzone erstreckt sich über eine größere Länge und verhindert ein unter Zugbelastung mögliches Ausbeulen des elastomeren Materials vor der Einschnürung der ersten Einspannzone.

Der den Endabschnitt aufnehmende Spalt in der zweiten Einspannzone ist geringfügig kleiner als die Wanddicke des Schlauchkörpers. Der elastomere Werkstoff kann in der zweiten Einspannzone nicht ausweichen. Die Schubkraftübertragung zwischen Festigkeitsträgerlage und elastomerem Werkstoff wird über die gesamte eingespannte Länge des Endabschnittes in der zweiten Einspannzone erreicht. Die Länge der zweiten Einspannzone wird nach den jeweiligen Haftwerten zwischen Gewebelage und elastomerem Werkstoff und der Reißkraft der Cordfäden bestimmt.

Eine vorteilhafte Ausgestaltung der Erfindung wird in Anspruch 2 gekennzeichnet. Der Endabschnitt des Schlauchkörpers ist zwischen den Umfangsflächen der Armatur und des Spannstücks auf einer entsprechend der Zugbelastungen und Werkstoffauswahl abgestimmten Länge eingespannt. Vom Schlauchkörper aus gesehen liegt zuerst die starke Spaltverengung, in der die Schlauchwand stark komprimiert wird. Diese Verengung hält die Schlauchwand formschlüssig fest. Der folgende Spaltabschnitt stellt durch die gegenüberliegenden Umfangsflächen der Armatur und des Spannstückes einen Formkanal für den elastomeren Werkstoff des eingespannten Endabschnittes dar. Der elastomere Werkstoff kann nicht ausweichen und überträgt die Zugkräfte des Festigkeitsträgers durch Schubspannungen.

Eine weitere vorteilhafte Ausgestaltung wird im Anspruch 3 gekennzeichnet. Die Wahl des Bereiches der lichten Weite im angegebenen Sinne führt zu einem guten Festhalten der Schlauchwand, ohne daß die Festigkeitsträgerlage verletzt wird.

Gemäß einer weiteren vorteilhaften Ausgestaltung nach Anspruch 4 beträgt die lichte Weite des Einspannspaltes in der zweiten Einspannzone 90-95% der Schlauchwanddicke. In der zweiten Einspannzone wird die Schlauchwand über eine größere Länge eingespannt und nur gering vorgespannt. Die geringe Vorspannung stellt sicher, daß in der zweiten Einspannzone kein Ausweichen des elastomeren Materials erfolgen kann.

Gemäß der Ausbildung der Erfindung nach Anspruch 5 ist die Verengung durch eine umlaufende Umfangsrippe an der Armatur und/oder dem Spannstück gebildet. Dabei ist es vorteilhaft, die Umfangsflächen konisch erweitert auszubilden.

Eine andere Ausgestaltung der Erfindung wird im Kennzeichen des Anspruchs 7 offenbart. Der umgebördelte Rand der Armatur ist gegen eine Seitenfläche der Armatur umgebogen. Das Ende dieses umgebördelten Randes bildet die erste Spannzone, in der die Schlauchwandung stark komprimiert und festgehalten wird. Die zweite Spannzone wird zwischen einem im Bördelraum angeordneten ringförmigen Kern und der umlaufenden Bördel realisiert. Wird auf diese Anordnung eine Zugbelastung auf den Schlauchkörper ausgeübt, so führt die durch die Festigkeitsträger übertragene Zugkraft zu einem geringen Ausbeulen des elastomeren Materials hinter der Verengung, bis das dortige freie Volumen ausgefüllt ist.

Die eingelegten ringförmigen Kerne können runden oder rechteckigen Querschnitt aufweisen.

Eine weitere vorteilhafte Ausgestaltung der Erfindung wird durch die Merkmale des Anspruchs 10 gekennzeichnet. Diese Ausführungsform eignet sich besonders für die Einspannung von Endabschnitten eines Heizbalges.

Durch die erfindungsgemäße vorteilhafte Kombination einer die Schlauchwand stark komprimierenden und somit festklemmenden Einspannzone und einer folgenden, die Ausbeulung des elastomeren Materials unter Zugbelastung verhindernden zweiten Einspannzone wird eine hohe Schubkraftübertragung im oberhalb der ersten Einspannstelle liegenden Teil des Endabschnittes erreicht. Wenn das elastomere Material in der zweiten Einspannzone nicht ausweichen kann, wird über die gesamte Einspannlänge eine ausreichende Schubkraftübertragung zwischen Festigkeitsträgerlage und elastomerem Werkstoff erreicht.

Anhand der Zeichnung werden nachstehend fünf Ausführungsbeispiele der Erfindung näher erläutert.

Es zeigt:
- Fig. 1: in schematischer Darstellung das zweizonige Einspannungsprinzip eines Endabschnittes eines Schlauchkörpers,
- Fig. 2: im Schnitt die Einspannung eines wulstlosen Schlauchrollbalges zwischen einer Armatur und einem daran befestigbaren Spannstück,
- Fig. 3: einen tellerartigen Armaturdeckel mit eingebördeltem, schlauchförmigem Endabschnitt,
- Fig. 4: eine modifizierte Ausführungsform der Ausbildung nach Fig. 3 mit einem rechteckigen Spannring,
- Fig. 5: die Einspannung eines mit Stahldrahtseilen verstärkten Heizbalges.

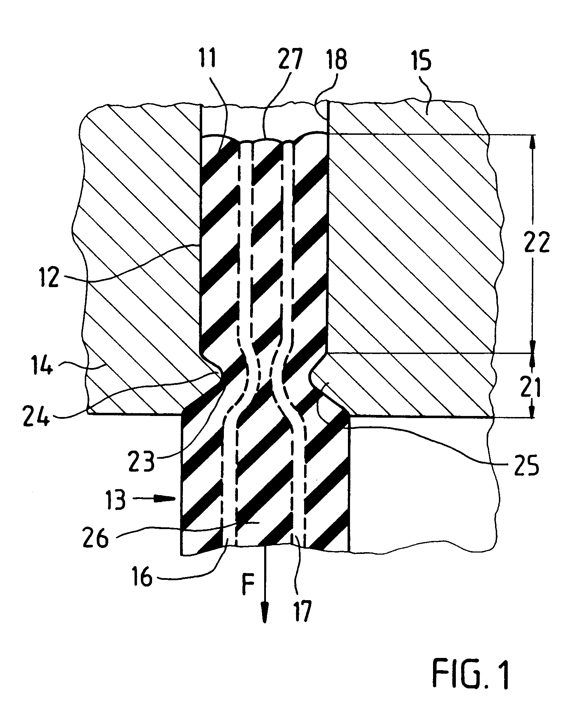

In der Fig. 1 ist ein Endabschnitt 12 eines glattzylindrischen Schlauchkörpers 13 aus elastomerem Werkstoff mit seiner Wand 11 zwischen zwei Einspannteilen 14 und 15 eingespannt. In der Wand 11 des angedeuteten Schlauchkörpers 13 sind zwei parallele Festigkeitsträgerlagen 16 und 17 in den elastomeren Werkstoff eingebettet. Die Wanddicke des Schlauchkörpers 13 bleibt über seine ganze Länge gleich. Die beiden Einspannteile 14 und 15 sind über hier nicht dargestellte Mittel gegeneinander verspannbar.

Der gezeigte Einspannbereich wird im wesentlichen durch den zwischen den beiden Einspannteilen 14 und 15 gebildeten Spalt 18 dargestellt. Der Einspannspalt 18 weist zwei unterschiedlich lange Einspannzonen 21 und 22 auf, in denen die Spaltweite jeweils unterschiedlich ist.

Am Anfang des Einspannspaltes 18, d.h. zum Hauptteil des Schlauchkörpers 13 gerichtet, ist die erste Einspannzone 21 als eine Spaltverengung 23 in Form von zwei sich gegenüberliegenden konischen Umfangsrippen 24 und 25 vorhanden. Die Schlauchwand 11 wird in diesem Bereich bis auf die Gesamtdicke der beiden Festigkeitsträgerlagen 16 und 17 mit zwischenliegender elastomerer Werkstoffschicht 26 komprimiert, wie sie im nicht eingespannten Bereich vorliegt. An diese erste Einspannzone 21 schließt sich die längere zweite Einspannzone 22 an, deren Spaltweite nur geringfügig kleiner ist als die Schlauchwanddicke. In dieser zweiten Einspannzone 22 wird die eingespannte Schlauchwand 11 wie in einem starren Formkanal eingeschlossen.

Wird auf den Schlauchkörper 13 eine Zugkraft in Richtung des eingezeichneten Pfeiles F ausgeübt, ergibt sich aufgrund der nach unten gezogenen Festigkeitsträgerlagen 16 und 17 eine eingeschnürte Stirnfläche 27 des Schlauchwandendes im Bereich der Festigkeitsträgerlagen. Diese Einschnürungen sind aber begrenzt, da die Zugkräfte über die gesamte Länge der Einspannzone 22 durch Schubspannungen im elastomeren Werkstoff übertragen werden. In der Verengung 23 in der Einspannzone 21 wird die Schlauchwand 11 durch die starke Komprimierung gegen Durchrutschen gesichert. Der elastomere Werkstoff aus der Einspannzone 22 vermag sich bei der Zugbelastung nicht auszubeulen und verbessert so die Übertragung von Schubkräften auf die umgebenden Einspannteile.

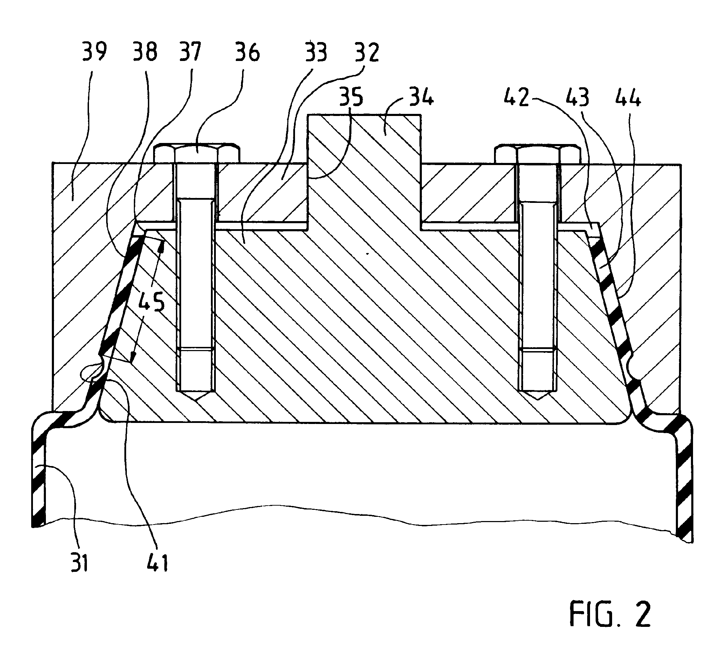

In Fig. 2 wird die Einspannung eines wulstlosen Schlauchbalges 31 zwischen einer Armatur 32 und einem daran befestigbaren Spannstück 33 gezeigt. Das Spannstück 33 ist mit einem zentrischen Ansatz 34 in einer zentrischen Bohrung 35 der Armatur 32 axial geführt und über Durchgangsschrauben 36 an der Armatur 32 angeschraubt. Das Spannstück 33 hat eine konisch verlaufende Mantelfläche 37, deren Neigung der Neigung einer inneren, konischen Umfangsfläche 38 der Armatur 32 entspricht, die somit das Spannstück 33 glockenförmig umgibt. Nahe des Endes des glockenförmigen Ansatzes 39 der Armatur 32 weist die innere Umfangsfläche 38 eine Umfangsrippe 41 auf, die den zwischen den Umfangsflächen 37 und 38 liegenden Einspannspalt 42 an dieser Stelle wesentlich verkleinert. Zwischen den Umfangsflächen ist die Schlauchwand 43 eines Endabschnittes 44 des Schlauchkörpers 31 eingespannt. Durch entsprechendes Anziehen der Durchgangsschrauben 36 steht der Endabschnitt 44 in der zweiten Einspannzone 45 über der Verengung 41 unter einer geringen Vorspannung.

Die Verengung 41 bildet die erste Einspannzone, in der die Wand 43 stark komprimiert ist und der Endabschnitt 44 am Durchrutschen unter Zugbelastung gehindert wird. Die über den hier nicht sichtbaren Festigkeitsträger übertragenen Zugkräfte werden in der zweiten Einspannzone 45 durch die im elastomeren Werkstoff auftretenden Schubkräfte an die Einspannteile 32 und 33 abgetragen.

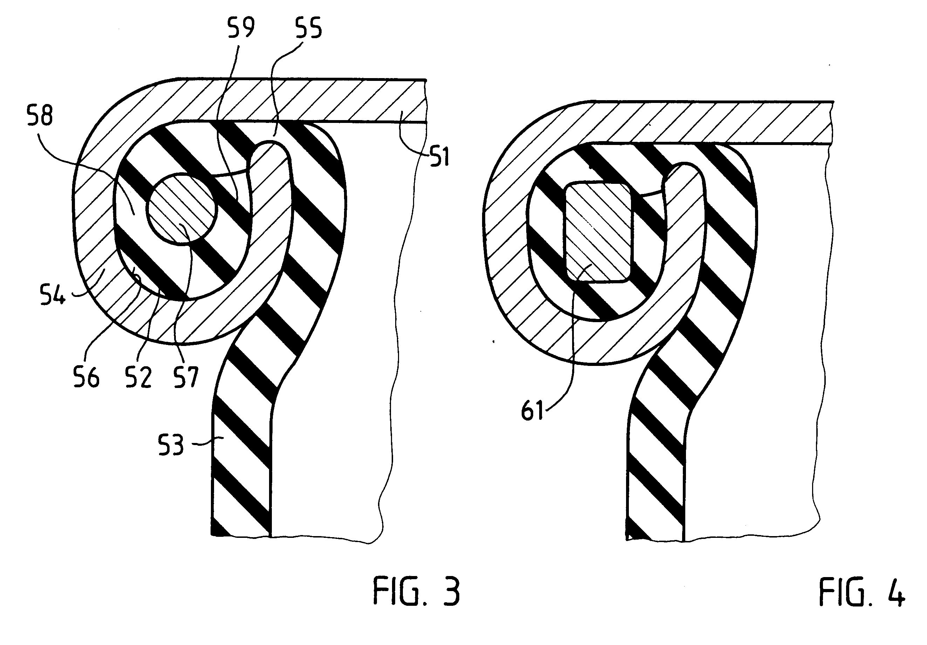

In der Fig. 3 weist die Einspannung einen tellerartigen Armaturdeckel 51 auf, an dem der Endabschnitt 52 des schlauchförmigen Körpers 53, beispielsweise ein Schlauchrollbalg, befestigt ist. Dieses ist dadurch erreicht worden, daß der Rand des Armaturdeckels 51 gegen seine Unterseite umgebördelt worden ist, wobei zwischen dem Ende der Bördel 54 und der Unterseite des Armaturdeckels 51 ein Abstand 55 verbleibt, der in seiner lichten Weite 50% der Schlauchwanddicke beträgt. In dem umbördelten Raum 56 ist ein im Querschnitt gesehen ringförmiger Kern 57 eingesetzt, um den der Endabschnitt 52 des Schlauchkörpers 53 herumgelegt ist. Die in der horizontalen Ebene diametral gegenüberliegenden Bereiche 58 und 59 des Bördelraumes 56 neben dem Kern 57 sind in ihrer lichten Weite in etwa 90% der Schlauchwanddicke. Die anderen Bereiche sind größer als die Schlauchwanddicke.

Bei einer Zugbelastung des Schlauchkörpers 53 fließt der elastomere Werkstoff vor die Verengung 55, bis der Raum ausgefüllt ist. Hierbei handelt es sich lediglich um ein geringfügiges Anschwellen vor der Verengung 55, da der Bördelraum 56 bei Herstellen des Anschlusses von elastomerem Werkstoff ausgefüllt war.

Die modifizierte Ausbildung gemäß Fig. 4 zeigt einen Kern 61, der einen rechteckigen Querschnitt aufweist. Der rechteckige Querschnitt ist der Bördelkontur im allgemeinen besser angepaßt.

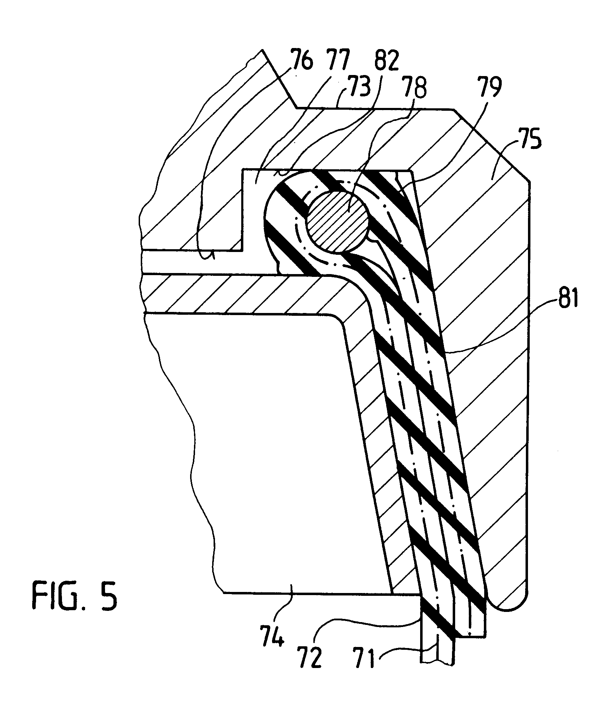

In der Fig. 5 wird die Einspannung eines Heizbalges 72 gezeigt. Die Festigkeitsträgerlage im Heizbalg 72 besteht aus Stahlcord 71. Derartige Heizbälge werden bei der Luftfederherstellung in den Vulkanisierformen verwendet. Die Heizbälge stehen unter einem Druck von ca. 12 bar bei einer Temperatur von 190°C. Unter Druckbeaufschlagung verformt sich der Heizbalg zur Volumenausfüllung der Form. Daraus resultiert eine Zugbelastung auf die Balgeinspannung.

Diese Balgeinspannung wird zwischen einer konischen Armatur 74 und einem umfassenden, glockenförmigen Spannstück 73 bewirkt. An der Innenseite des glockenförmigen Ansatzes 75 weist der Boden 76 des Spannstückes 73 eine Ringnut 77 auf. In dem Raum dieser Ringnut 77 ist ein ringförmiger Kern 78 eingelegt, um den der Endabschnitt 79 des Heizbalges 72 herumgelegt worden ist. Die zulaufende Wandlänge des Schlauchkörpers 72 liegt auf der konischen Außenfläche der Armatur 74 auf, während die ablaufende Länge 81 des Endabschnittes 79 zwischen dem Schlauchkörper 72 und dem konischen, glockenförmigen Ansatz 75 unter leichter Vorspannung eingespannt ist. Die Einspannzone hoher Kompression wird im Bereich der Nut 77 realisiert. Dazu ist der Abstand zwischen dem Umfang des Kernes 78 und dem Nutboden 82 einerseits und der Oberfläche des Spannstückes 74 andererseits jeweils nur so groß wie die Dicke der Stahldrahtseile 71.

Über die eingespannte Länge 81 des Endabschnittes 79 im Bereich zwischen Schlauchkörper 72 und glockenförmigem Außenmantel 75 wird die auftretende Zugkraft als Schubkraft übertragen. Die zur Erforderung der Montage notwendigen kleinen Freiräume werden bei Zugbelastung vom elastomeren Werkstoff ausgefüllt.

## Patentansprüche

1. Befestigung eines wulstlosen Endabschnittes eines auf Zug belastbaren Schlauchkörpers aus elastomerem Werkstoff mit mindestens einer eingebetteten Festigkeitsträgerlage aus Cordfäden an einer Armatur aus Metall oder Kunststoff durch Einspannen der Wand des Endabschnittes zwischen der Armatur und einem separaten konzentrischen Spannstück, **gekennzeichnet durch folgende Merkmale:**
- die Einspannung des Endabschnittes (12; 44; 52; 79) weist zwei hintereinander liegende Einspannzonen (21, 22; 41, 45; 55, 58; 77, 81) auf,
- in der ersten Einspannzone (21; 41; 55; 77) ist die Wandung des Schlauchkörpers (13; 31; 53; 72) um mindestens 30% bis höchstens auf die Gesamtdicke der Festigkeitsträgerlage (16, 17; 71) komprimiert,
- die erste Einspannzone (21; 41; 55; 77) liegt zwischen dem Schlauchkörperhauptteil und der zweiten Einspannzone (22; 45; 58; 81),
- in der zweiten Einspannzone wird die Schlauchwandung nur geringfügig komprimiert,
- die zweite Einspannzone erstreckt sich über eine größere Länge als die erste Einspannzone,
- die Länge der zweiten Einspannzone ist so bemessen, daß die durch die Haftung von Fäden und Elastomer übertragbare Schubkraft mindestens gleich der Reißkraft der Fäden ist.

2. Befestigung nach Anspruch 1, dadurch gekennzeichnet, daß die Armatur (32) und das Spannstück (33) mit entsprechend zueinanderliegenden Umfangsflächen (37, 38) versehen sind, zwischen denen ein die Schlauchwand (43) des Endabschnittes (44) aufnehmender Einspannspalt (42) gebildet ist, der am Anfang eine erste Einspannzone (41) darstellende Verengung und daran anschließend eine die zweite Spannzone (45) bildende längere Spannstrecke gleichbleibender Weite aufweist.

3. Befestigung nach Anspruch 2, dadurch gekennzeichnet, daß die lichte Weite der Verengung (41) nicht größer als 70% der Schlauchwanddicke und nicht kleiner als die Gesamtdicke der Festigkeitsträgerlage ist.

4. Befestigung nach Anspruch 2, dadurch gekennzeichnet, daß die lichte Weite des Einspannspaltes (42) in der zweiten Einspannzone (45) 90-95% der Schlauchwanddicke beträgt.

5. Befestigung nach Anspruch 2, dadurch gekennzeichnet, daß die Verengung (21; 45) durch eine umlaufende Umfangsrippe (24; 41) an der Armatur (32) und/oder dem Spannstück (33) gebildet ist.

6. Befestigung nach Anspruch 2, dadurch gekennzeichnet, daß die Umfangsflächen (37; 38) von Armatur (32) und Spannstück (33) sich konisch erweiternd ausgebildet sind.

7. Befestigung nach Anspruch 1, gekennzeichnet durch folgende Merkmale:
- daß die Armatur (51) tellerartig ausgebildet ist und einen umgebördelten Rand (54) aufweist,
- daß das Ende des umgebördeltens Randes (54) die eingelegte Schlauchwand (52) gegen die Tellerfläche drückt und sich in die Schlauchwand (52) eindrückt,
- daß in dem von der Bördel (54) gebildeten Raum ein ringförmiger Kern (57) angeordnet ist, um den der Endabschnitt (52) des Schlauchkörpers (53) geschlungen ist,
- daß der Abstand zwischen dem ringförmigen Kern (57) und der Bördelwand (54) in mindestens einem Umfangsbereich (58) des Kernes (57) geringfügig kleiner ist als die Schlauchwanddicke.

8. Befestigung nach Anspruch 7, dadurch gekennzeichnet, daß der ringförmige Kern (57) einen runden Querschnitt aufweist.

9. Befestigung nach Anspruch 7, dadurch gekennzeichnet, daß der ringförmige Kern (61) einen rechteckigen Querschnitt aufweist.

10. Befestigung nach Anspruch 1, gekennzeichnet durch folgende Merkmale:
- die Armatur (74) weist einen sich konisch erweiternden Mantel auf,
- ein glockenförmiges Spannstück (73) umfaßt unter Abstand die äußere Umfangsfläche der Armatur (74),
- der so gebildete Einspannspalt endet in einer ringförmigen Innennut (77) im Boden (76) des Spannstückes (73),
- in der Nut (77) ist ein ringförmiger Kern (78) angeordnet, um den der Endabschnitt (79) herumgelegt ist,
- die freie Endlänge (81) des Schlauchendes ist im Einspannspalt auf dem Schlauchkörper (72) vorgespannt zurückgeführt.

## Claims

1. Means for securing a beadless end portion of a tensionable hose body formed from elastomeric material, having at least one embedded layer of reinforcing members formed from cord filaments, to a fitting formed from metal or plastics material by clamping the wall of the end portion in position between the fitting and a separate, concentric clamping member, **characterised by the following features:**
- the means for clamping the end portion (12; 44; 52; 79) in position has two clamping zones (21, 22; 41, 45; 55, 58; 77, 81) disposed one behind the other,
- in the first clamping zone (21; 41; 55; 77), the wall of the hose body (13; 31; 53; 72) is compressed by at least 30 % to a maximum corresponding to the total thickness of the layer of reinforcing members (16, 17; 71),
- the first clamping zone (21; 41; 55; 77) lies between the main part of the hose body and the second clamping zone (22; 45; 58; 81),
- in the second clamping zone, the hose wall is only slightly compressed,
- the second clamping zone extends over a greater length than the first clamping zone,
- the length of the second clamping zone is so dimensioned that the pushing force, which is transmittable through the adhesion of filaments and elastomer, is at least identical to the tensile strength of the filaments.

2. Securing means according to claim 1, characterised in that the fitting (32) and the clamping member (33) are provided with circumferential faces (37, 38), which are situated so as to correspond with each other and between which a clamping gap (42) is formed, which accommodates the hose wall (43) of the end portion (44) and has, at the beginning, a constricted portion representing a first clamping zone (41) and, subsequently thereto, a longer clamping path of uniform width which forms the second clamping zone (45).

3. Securing means according to claim 2, characterised in that the inside width of the constricted portion (41) is not greater than 70 % of the thickness of the hose wall and is not smaller than the total thickness of the layer of reinforcing members.

4. Securing means according to claim 2, characterised in that the inside width of the clamping gap (42) in the second clamping zone (45) is 90-95 % of the thickness of the hose wall.

5. Securing means according to claim 2, characterised in that the constricted portion (21; 45) is formed by a circulatory circumferential rib (24; 41) on the fitting (32) and/or on the clamping member (33).

6. Securing means according to claim 2, characterised in that the circumferential faces (37; 38) of fitting (32) and clamping member (33) have a conically widening configuration.

7. Securing means according to claim 1, characterised by the following features:
- that the fitting (51) has a plate-like configuration and a flanged edge (54),
- that the end of the flanged edge (54) presses the inserted hose wall (52) towards the plate surface and is pressed into the hose wall (52),
- that an annular core (57) is disposed in the area formed by the flange (54), around which core the end portion (52) of the hose body (53) is looped,
- that the spacing between the annular core (57) and the flanged wall (54) in at least one circumferential region (58) of the core (57) is slightly smaller than the thickness of the hose wall.

8. Securing means according to claim 7, characterised in that the annular core (57) has a circular cross-section.

9. Securing means according to claim 7, characterised in that the annular core (61) has a rectangular cross-section.

10. Securing means according to claim 1, characterised by the following features:
- the fitting (74) has a conically widening casing,
- a bell-shaped clamping member (73) surrounds the outer circumferential surface of the fitting (74) with a spacing therebetween,
- the clamping gap, thus formed, terminates in an annular internal groove (77) in the base (76) of the clamping member (73),
- an annular core (78) is disposed in the groove (77), around which core the end portion (79) is placed,
- the free final length (81) of the hose end is conducted back on the hose body (72) in an initially tensioned manner in the clamping gap.

## Revendications

1. Fixation d'une partie extrême sans bourrelet d'un corps de flexible en matière élastomère, pouvant subir un effort de traction et comprenant au moins une couche noyée de support de stabilité en fils de corde, sur une armature de métal ou de matière plastique par encastrement de la cloison de la partie extrême entre l'armature et une pièce séparée concentrique de serrage, caractérisée par les particularités suivantes :
- l'encastrement de la partie extrême (12 ; 44 ; 52 ; 79) comprend deux zones successives d'encastrement (21, 22 ; 41, 45 ; 55, 58 ; 77, 81),
- la cloison du corps du flexible (13 ; 31 ; 53 ; 72) est comprimée dans la première zone d'encastrement (21 ; 41 ; 55 ; 77) d'au moins 30 % jusqu'au maximum à l'épaisseur globale de la couche de support de stabilité (16, 17 ; 71),
- la première zone d'encastrement (21 ; 41 ; 55; 77) est située entre la partie principale du corps du flexible et la seconde zone d'encastrement (22 ; 45 ; 58 ; 81),
- la cloison du flexible n'est que faiblement comprimée dans la seconde zone d'encastrement,
- la seconde zone d'encastrement se prolonge sur une longueur supérieure à celle de la première zone d'encastrement,
- la longueur de la seconde zone d'encastrement est calculée de manière que le cisaillement pouvant être transmis par l'adhérence des fils et de l'élastomère soit au moins égal à la résistance à la rupture des fils.

2. Fixation selon la revendication 1, caractérisée en ce que l'armature (32) et la pièce de serrage(33) comportent des surfaces circonférentielles opposées qui se correspondent (37, 38) et entre lesquelles est formé un intervalle d'encastrement (42) qui loge la cloison (43) de la partie extrême (44) du flexible et qui comprend au début un rétrécissement représentant la première zone d'encastrement (41) et à la suite de ce dernier un tronçon plus long de serrage, de largeur constante, qui forme la seconde zone d'encastrement (45).

3. Fixation selon la revendication 2, caractérisée en ce que la largeur de l'ouverture du rétrécissement (41) n'est pas supérieur à 70 % de l'épaisseur de la cloison du flexible et pas inférieure à l'épaisseur globale de la couche de support de stabilité.

4. Fixation selon la revendication 2, caractérisée en ce que la largeur de l'ouverture de l'intervalle d'encastrement (42) dans la seconde zone (45) correspond à 90-95 % de l'épaisseur de la cloison du flexible.

5. Fixation selon la revendication 2, caractérisée en ce que le rétrécissement (21 ; 45) est formé par une nervure circonférentielle (24 ; 41) de l'armature (32) et/ou de la pièce de serrage (33).

6. Fixation selon la revendication 2, caractérisée en ce que les surfaces circonférentielles (37 ; 38) de l'armature (32) et de la pièce de serrage (33) ont une forme conique allant en s'élargissant.

7. Fixation selon la revendication 1, caractérisée par les particularités suivantes :
- l'armature (51) est en forme de plateau et comprend un bord rabattu (54),
- l'extrémité du bord rabattu (54) comprime la cloison insérée (52) du flexible contre la surface du plateau et s'enfonce dans la cloison du flexible (52),
- un noyau annulaire (57), autour duquel la partie extrême (52) du corps de flexible (53) est enroulée, est disposé dans l'espace formé par le bord rabattu (54),
- la distance séparant le noyau annulaire (57) et la paroi rabattue (54) est légèrement plus faible que l'épaisseur de la cloison du flexible dans au moins une partie circonférentielle (58) du noyau (57).

8. Fixation selon la revendication 7, caractérisée en ce que le noyau annulaire (57) a une section ronde.

9. Fixation selon la revendication 7, caractérisée en ce que le noyau annulaire (61) a une section rectangulaire.

10. Fixation selon la revendication 1, caractérisée par les particularités suivantes :
- l'armature (74) comprend une enveloppe qui s'élargit en cône,
- une pièce de serrage en forme de cloche (73) entoure à distance la surface circonférentielle extérieure de l'armature (74),
- l'intervalle d'encastrement ainsi formé aboutit à une gorge annulaire intérieure (77) située dans le fond (76) de la pièce de serrage (73),
- un noyau annulaire (78), autour duquel la partie extrême (79) est enroulée, est disposé dans la gorge (77),
- le tronçon libre d'extrémité (81) de l'extrémité du flexible est rabattu sous précontrainte contre le corps du flexible (72) à l'intérieur de l'intervalle d'encastrement.
